(19) Europäisches Patentamt
European Patent Office
Office européen des brevets

(11) Numéro de publication : **0 549 391 A1**

(12) **DEMANDE DE BREVET EUROPEEN**

(21) Numéro de dépôt : **92403286.5**

(51) Int. Cl.$^5$ : **C08G 18/38,** G02B 1/04

(22) Date de dépôt : **04.12.92**

(30) Priorité : **13.12.91 FR 9115606**

(43) Date de publication de la demande : **30.06.93 Bulletin 93/26**

(84) Etats contractants désignés : **DE ES FR GB IT**

(71) Demandeur : **ESSILOR INTERNATIONAL, Compagnie Générale d'Optique
1, rue Thomas Edison, Echat 902
F-94000 Créteil (FR)**

(72) Inventeur : **Bochu, Christophe
8, rue du 18 Juin 1940
F-94700 Maisons-Alfort (fr)**
Inventeur : **Yean, Leanirith
2, rue des Lavandes
F-91160 Longjumeau (FR)**
Inventeur : **Lagadec, Claire
7, Place Salvador Allende
F-94000 Creteil (fr)**
Inventeur : **Lavault, Sylvie
17, rue Jassron
F-69003 Lyon (fr)**
Inventeur : **Velleret, Gérard
65, avenue Philippe Auguste
F-75011 Paris (fr)**

(74) Mandataire : **Thibon-Littaye, Annick
Cabinet A. THIBON-LITTAYE 11 rue de l'Etang
F-78160 Marly-le-Roi (FR)**

(54) **Lentilles opthalmiques à base de polyurethanes de polythiols.**

(57) L'invention concerne des lentilles ophtalmiques obtenues par polymérisation d'une composition de polyuréthanes, qui comprend :

— un premier constituant formé par un polyisocyanate au moins difonctionnel ;

— un deuxième constituant formé par un monomère saturé acyclique porteur d'au moins trois fonctions réactives à l'égard des isocyanates pour former des liaisons carbamates, parmi lesquelles fonctions réactives au moins 40% en nombre sont des groupes mercaptans -SH, la proportion desdites fonctions étant d'au moins 45% en masse par rapport à la masse moléculaire dudit monomère ;

— et un troisième constituant formé par un monomère soufré portant au moins un groupement de type (HS-Z-COO) où Z représente un radical hydrocarboné avantageusement de type polyester d'acide mercapto-carboxylique ou mercaptal d'ester de thio-alcanol.

EP 0 549 391 A1

La présente invention concerne la fabrication de lentilles ophtalmiques à base de polyuréthanes de type soufrés. Elle vise principalement à répondre au mieux à l'ensemble des impératifs propres à la fabrication de lentilles ophtalmiques, tels que les besoins d'un indice de réfraction élevé, d'une faible dispersion, de grandes qualités de résistance mécanique, ou plus particulièrement thermomécanique, et la facilité de mise en oeuvre. Les matériaux polymères obtenus doivent faire preuve notamment d'une température de transition vitreuse assez élevée pour leur permettre de supporter les traitements thermiques que l'on est amené à leur faire subir après moulage et durcissement, et ce dans les conditions d'une fabrication manuelle d'objets de faibles dimensions qui demandent un surfaçage particulièrement soigneux, conduisant à une surface lisse et adaptée à préserver toutes les qualités des matériaux destinés à constituer les lentilles ophtalmiques, qu'elles soient d'ordre optique, mécanique, physico-chimique, malgré par exemple les conditions d'emploi d'un port journalier en verres de lunettes.

On connaît déjà des résines de polyuréthane soufrées utilisables dans ce genre de fabrication, dont la composition combine un polyisocyanate au moins difonctionnel avec un monomère plurifonctionnel portant des fonctions réactives à l'égard des isocyanates pour former des liaisons carbamates et dans lequel certaines au moins de ces fonctions sont des groupes mercaptan -SH.

La présente invention propose d'utiliser dans de telles compositions, simultanément deux monomères thiol dont l'un est choisi parmi ceux comportant une fonction ester dans leur chaîne et dont l'autre est choisi parmi les composés saturés thiol de type acyclique capables, s'ils étaient utilisés seuls, de conduire à un matériau présentant un point de transition vitreuse particulièrement élevé.

De ce point de vue :

- un premier constituant de la composition de lentilles opthalmiques suivant l'invention étant formé par un polyisocyanate au moins difonctionnel, de préférence de type isocyanate d'aryl-alkyle, classique en soi,
- un second constituant est avantageusement constitué par un monomère saturé thiol plurifonctionnel de type acyclique, capable de conduire, s'il était utilisé seul, à une température de transition vitreuse supérieure à 100 °C, et de préférence au moins de l'ordre de 130 °C.
- et un troisième constituant est un monomère ester thiol constitué par un composé comportant dans sa formule au moins 'une fois un groupement du type (HS-Z-COO-) où Z représente un radical hydrocarboné cyclique ou acyclique, présentant de préférence un poids moléculaire relativement élevé par rapport à celui du second constituant et qui peut être dû notamment à la présence de groupes cycliques de type aliphatiques ou aryliques, comportant éventuellement des hétéroatomes, et/ou comportant dans sa formule des liaisons de type éther ou thioéther, et par ailleurs préférentiellement dépourvu de fonctions réactives à l'égard des isocyanates autres que les groupes mercaptan.

Dans une telle composition, les proportions respectives des constituants sont choisies pour partie d'une manière classique en soi, en fonction du nombre de fonctions isocyanate du premier constituant qui doivent être satisfaites par les fonctions respectives du deuxième et du troisième constituants, lesquelles peuvent être non seulement les groupes mercaptan, indispensables pour obtenir un polyuréthane soufré, mais aussi notamment des groupes hydroxyle -OH éventuellement présents, qui réagissent également avec les groupes isocyanate pour former des liaisons carbamate. Les proportions sont donc là réglées par la stoechiométrie. Préférentiellement, le rapport NCO/(OH+SH) est choisi entre 0,4 et 1,2.

Par ailleurs les proportions relatives du second et du troisième constituant sont généralement comprises entre 10 % et 90 % pour chacun, en proportion molaire de leur total, suivant leurs natures respectives.

Dans des modes de mise en oeuvre préférés de l'invention, le second constituant, capable de conduire, s'il était utilisé seul, à une température de transition vitreuse supérieure à 100°C, et de préférence au moins de l'ordre de 130°C,est choisi parmi les monomères saturés thiol plurifonctionnels de type acycliques tels que ceux que l'on connaît déjà par le brevet antérieur de la demanderesse n° 89 09492, publié sous le n° 2 649 711. Il est alors notamment porteur par molécule d'au moins trois fonctions réactives à l'égard des isocyanates pour former des liaisons carbamates, parmi lesquelles fonctions réactives au moins 40% en nombre sont des groupes mercaptans -SH, la proportion desdites fonctions réactives étant d'au moins 45% en masse moléculaire dudit monomère.

L'invention permet par là d'obtenir après polymérisation de la composition des matériaux de lentilles ophtalmiques adaptées à cette application, compte tenu notamment de leurs qualités optiques et de leur facilité de surfaçage manuel.

On a pu constater que l'on ne rencontre plus les inconvénients des monomères soufrés de faible poids moléculaire de type saturé acyclique et dépourvus de liaisons internes de type éther ou thioéther, tels que ceux de la demande de brevet citée précédemment, qui résident en particulier dans le fait qu'ils dégagent des odeurs particulièrement puissantes, rendant difficile la manipulation en cours de fabrication d'articles tels que les lentilles ophtalmiques, alors que l'on conserve l'avantage d'une température de transition vitreuse élevée,

à savoir de préférence supérieure à 100 °C, et au moins égale à 90 °C. De plus, l'invention permet pour le produit final d'obtenir d'autres caractéristiques recherchées pour une lentille ophtalmique, à savoir en pratique un indice de réfraction supérieur ou égal à 1,6 et un coefficient de constringence élevé (inverse de la dispersion), par exemple de l'ordre de 30 à 35.

Ainsi, suivant l'une de ses caractéristiques, l'invention a pour objet des lentilles ophtalmiques caractérisées en ce qu'elles résultent du durcissement d'une composition de polyuréthane comprenant :

- un premier constituant formé par un polyisocyanate au moins difonctionnel,
- un deuxième constituant formé par un monomère saturé acyclique non ester porteur d'au moins trois fonctions réactives à l'égard des isocyanates pour former des liaisons carbamates, parmi lesquelles fonctions réactives au moins 40% en nombre sont des groupes mercaptan -SH, la proportion desdites fonctions étant d'au moins 45% en masse par rapport à la masse moléculaire dudit monomère,
- et un troisième constituant formé par un monomère soufré portant au moins un groupement de type (HS-Z-COO-), où Z représente un radical hydrocarboné, choisi notamment parmi les monomères polythiois de type ester de polyol d'acide mercapto-carboxylique et les monomères polythiois de type mercaptal d'ester de thioalcanol,

le second et le troisième constituants étant chacun présents dans une proportion de l'ordre de 10 à 90 % en moles par rapport à la quantité molaire du total du second et du troisième constituants, tributaire de la proportion des fonctions isocyanate,

ou, en d'autres termes, étant présents dans des proportions respectives adaptées à éviter les odeurs gênantes du second constituant en cours de fabrication et à conduire néanmoins à un matériau de lentille présentant une température de transition vitreuse au moins égale à 90 °C, un indice de réfraction supérieur ou au moins égal à 1,6 et un coefficient de constringence de l'ordre de 30 à 35.

Dans ce cadre, un premier constituant à fonctions réactives isocyanate particulièrement avantageux est le xylylène diisocyanate. CePendant, d'autres constituants homologues peuvent être choisis parmi les di-isocyanates d'aryl-alkyle répondant à la formule générale :

$$OCN-R-(C_6H_4)-R'-NCO$$

dans laquelle R et R', identiques ou différents, sont chacun un radical alkyle comprenant de 1 à 3 atomes de carbone et sont placés l'un par rapport à l'autre en position ortho, para ou méta du noyau aromatique. Il est également souhaitable, d'une manière générale, que la composition des lentilles suivant l'invention ne contienne aucun polyisocyanate soufré, de sorte que tous les atomes de soufre dans le polymère final proviennent des groupes mercaptan des deux monomères thiols plurifonctionnels.

Les monomères correspondant au second constituant peuvent être ceux qui sont décrits dans la demande de brevet de la demanderesse FR-A-2 649 741. D'une manière générale, on a plus intérêt à utiliser un monomère au moins trifonctionnel, constitué par un composé aliphatique qui comporte au moins 3 atomes de carbone par molécule et au plus 10 atomes de carbone, dont au moins les 3/4, et de préférence la totalité sont pourvus de fonctions réactives -SH ou -OH. De préférence les fonctions réactives comprennent au moins 3 groupes mercaptan -SH et au plus un groupe -OH.

Ce monomère est le plus souvent choisi parmi les composés suivants : dimercapto-propanol, dithioérythritol, trithioglycérine, tétramercapto-butane, pentaérythrithiol. Il est en outre souhaitable que si le polyisocyanate est le xylylène diisocyanate, le monomère soufré ne soit pas le pentaérythrithiol.

En ce qui concerne le troisième constituant, qui comporte au moins une fois un groupement du type (HS -Z -COO-), les formes de mise en oeuvre préférées de l'invention impliquent à ce titre l'emploi de composés soufrés nouveaux de type ester qui sont de préférence spécialement sélectionnées par la présente invention parmi les esters de polyols d'acides mercapto carboxyliques, notamment les esters thioglycoliques, ou parmi les mercaptals d'esters de thioalcanols ou thioacétals, dont la formule est dépourvue de fonctions -OH, comme il apparaîtra ci-après.

Les esters de polyols d'acides mercaptocarboxyliques préconisés suivant l'invention se présentent avantageusement sous la formule générale :

$$\left[ HS - Z - COO \right]_n A$$

dans laquelle :

- Z représente un radical alkylène inférieur, linéaire ou ramifié,
- A représente un reste hydrocarboné de valence n, de préférence choisi parmi les radicaux de formules:

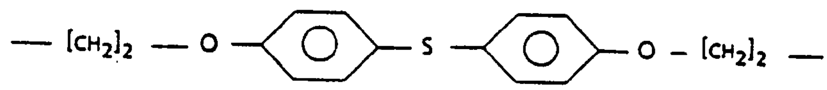

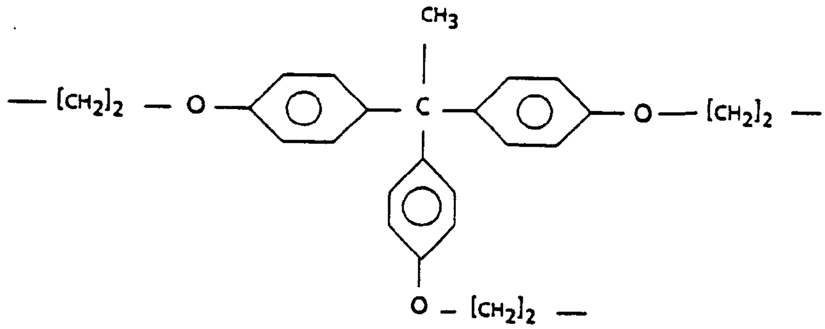

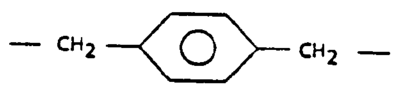

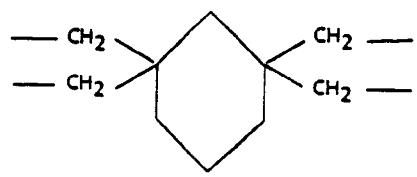

- n représente 2, 3, ou 5.

Ces composés sont préparés de manière connue en soi par estérification d'un polyol de formule A - (OH)n avec un acide mercapto-carboxylique de formule HS - Z - COOH, formules dans lesquelles A et Z ont les mêmes significations que précédemment, et en présence des catalyseurs habituels de ce type de réaction.

Ils peuvent être également obtenus par transestérification entre un polyol A - $(OH)_n$ et un ester d'alcool de bas point d'ébullition (le plus souvent ester de méthanol) de l'acide mercapto-carboxylique HS - Z -COOL, en présence des catalyseurs habituels de transestérification.

Des exemples particulièrement avantageux sont représentés par les esters thioglycoliques du type des pluri-thioglycolates de benzène ou cyclohexane pluri-alkylène et/ou de (thio)phénylène alkyle ou oxyalkyle, tels les composés suivants : bis-thioglycolate de benzène diméthylène, bis-thioglycolate de thio-diphénylène oxyéthyle, tris-thioglycolate d'éthane tris(phénylèneoxyéthyle), pentakis thioglycolate de tétraméthylène cyclohexyle.

En ce qui concerne les mercaptals d'esters de thioalcanols préconisés suivant l'invention, ils se présentent avantageusement sous la formule générale :

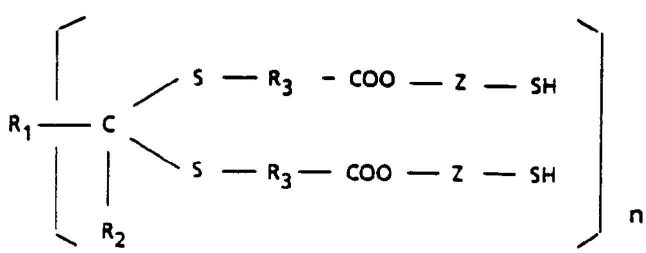

dans laquelle

- Z correspond à

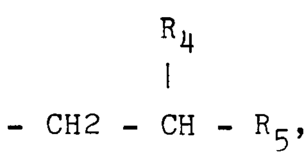

- n représente 1 ou 2,
- $R_1$ représente un radical hydrocarboné cyclique ou acyclique de valence n pouvant comporter dans sa

chaîne hydrocarbonée un hétéroatome, ou un lien valentiel simple,

- $R_2$ représente un atome d'hydrogène ou un radical alkyl inférieur cyclique ou acyclique, notamment un radical alkyle inférieur comprenant de 1 à 6 atomes de carbone ou un radical aryle,
  ou pour n:1, $R_1$ et $R_2$ forment ensemble un radical alkylène de 4 à 11 atomes de carbone,
- $R_3$ représente un radical akylène inférieur,
- $R_4$ représente un atome d'hydrogène ou un radical SH,
- $R_5$ représente un lien valentiel simple ou un radical méthylène.

De préférence, lorsque n=1, $R_1$ représente un radical phényle ou un radical thiényl-2 et alors: $R_2$ représente un atome d'hydrogène, $R_3$ représente un radical éthylène, $R_4$ représente un atome d'hydrogène et $R_5$ représente un lien valentiel simple.

De préférence, lorsque n=2, $R_1$ représente un paraphénylène ou un lien valentiel simple et alors: $R_2$ représente un atome d'hydrogène, $R_3$ représente un radical méthylène, $R_4$ représente un atome d'hydrogène et $R_5$ représente un lien valentiel simple.

Ces composés soufrés peuvent être préparés par estérification de l'acide carboxylique correspondant de formule :

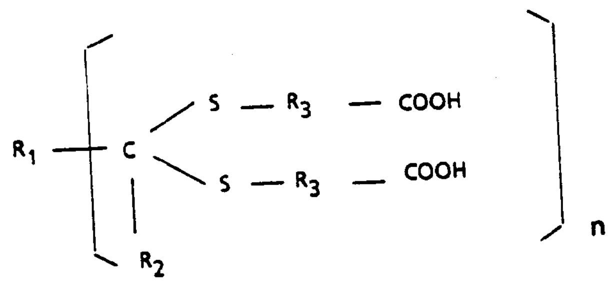

pour laquelle $R_1$, $R_2$ et $R_3$ sont définis comme précédemment, avec un thioalcanol de formule :

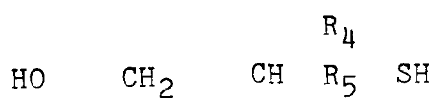

$R_4$ et $R_5$ étant définis comme précédemment.

Cette réaction d'estérification se fait en présence de catalyseurs habituellement connus pour ce type de réaction, tels que les acides protoniques. Elle est effectuée en général dans un solvant organique formant un azéotrope avec l'eau afin de permettre une élimination de l'eau formée dans la réaction. La température est souvent de 50 à 150°C et en pratique, elle peut être avantageusement égale à la température de reflux du solvant utilisé.

Les acides carboxyliques utiles ici peuvent être obtenus par réaction d'un aldéhyde ou d'une cétone de formule générale :

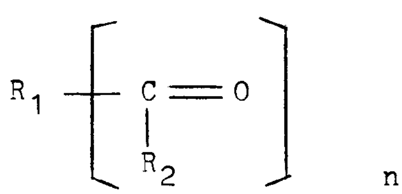

pour laquelle $R_1$ et $R_2$ sont définis comme précédemment, avec un acide mercapto-carboxylique de formule :

$$HS - R_3 - COOH$$

dans laquelle $R_3$ est défini de la même façon que précédemment. Les conditions de leur préparation sont en général pratiquement les mêmes que celles de leur estérification ultérieure.

Des exemples particulièrement avantageux de tels mercaptals d'esters de thioalcanol sont représentés par les mercaptals bis-mercapto-alkoxy-carbonylés dérivés de mono ou poly acides aryliques, alkyliques ou hétérocycliques, parmi lesquels notamment les mercaptals suivants : bis (bis(mercapto-2 éthoxycarbonyl-méthylthio) méthylène)-1,4 benzène, tétrakis(mercapto-2 éthoxycarbonyl-méthylthio)-1,1,2,2 éthane, 2-thiényl-4 dithia-3,5 pimélate de bis (mercapto-2 éthyle), phényl-4 dithia-3,5 pimélate de bis (mercapto-2 éthyle).

Par réaction avec au moins un polyisocyanate, ces deux types de composés soufrés de type esters dont le poids moléculaire est relativement élevé, conviennent parfaitement à la préparation de polythio-uréthanes satisfaisant aux objectifs de l'invention, quand ils sont utilisés en mélange avec d'autres polythiois connus, tels que ceux du brevet français FR-2 649 711, dont le poids moléculaire est généralement plus faible. Ils présentent de nombreux avantages parmi lesquels ils sont facilement synthétisables, ils sont peu volatils et ils ne présentent pas d'inconvénients liés à l'odeur.

Des essais qui ont été effectués pour utiliser des compositions suivant l'invention à trois constituants dans la fabrication de lentilles ophtalmiques à base de polythiouréthane ont permis de constater que l'on évite les difficultés de manipulation liées à l'odeur des polythiois de type acyclique saturé connus de la demande de brevet français déjà citée et que les polymères transparents obtenus possèdent des indices de réfraction au moins égaux à 1,6, une température de transition vitreuse supérieure à 90 °C et de préférence au moins égale à 95 °C, un coefficient de constringence (inverse de la dispersion) de l'ordre de 30.

On peut également mettre en lumière des éléments de choix préférentiels en ce qui concerne la nature des monomères thiol ainsi que leurs proportions relatives à l'intérieur d'une gamme de 10 à 90 % en moles d'un polythiol d'alcane saturé non ester représentant le second constituant pour 90 à 10 % en moles d'un ester polythiol de poids moléculaire plus élevé du type ester de polyol d'acide mercapto carboxylique ou du type mercaptal d'ester de thioalcanol, ces chiffres étant bien entendu exprimés par rapport au nombre total de moles des deux monomères soufrés. La préférence va alors vers, toujours en nombre de moles de monomères polythiol d'alcane non ester pour 100 moles de mélanges des deux monomères :

- de 10 à 50 %, avantageusement de 20 à 30 % de dimercapto propanol, lorsque le polythiol ester (troisième constituant) apportant le complément à 100 moles, est un thioacétal comme défini ci-dessus;
- de 10 à 60 % notamment de 20 à 50 %, de dimercapto propanol, lorsque le polythiol ester est un ester thioglycolique;
- de 10 à 70 % et notamment de l'ordre de 20 à 60 % lorsque le polythiol ester est un ester thioglycolique comme déjà défini, et le monomère non ester est la trithioglycérine ou trimercapto propane ;
- de 70 à 90 %, et notamment de 80 à 90 %, de trithioglycérine lorsque le polythiol ester est du type thioacétal.

On remarque aussi que dans ces gammes préférentielles, la proportion du monomère ester peut être avantageusement plus forte en combinaison avec le dimercapto propanol, à savoir plutôt comprise entre 40 et 90 %, alors qu'elle serait plutôt plus faible en combinaison avec la trithioglycérine, à savoir de l'ordre de 10 à 50 %.

Les lentilles ophtalmiques obtenues ne se dégradent pas dans le temps, ni à la lumière, ni aux intempéries (que ce soit en particulier par jaunissement ou par pertes des propriétés mécaniques). Elles présentent une bonne résistance aux chocs, à l'abrasion et à la rayure, elles sont colorables et faciles à démouler. Leurs propriétés thermomécaniques sont bonnes, même au-dessus des températures de transition vitreuse.

On décrira maintenant plus en détails l'invention dans le cadre d'exemples particuliers de mise en oeuvre pour la fabrication de lentilles constituant des verres de lunettes, qui ne sont nullement limitatifs.

Dans ces exemples on utilise comme polyisocyanate le xylylène diisocyanate (XDI), bien connu en soi.

Comme monomère soufré non ester on utilise soit le dimercapto-1,2 propanol (DMP) de formule :

$$HS\text{-}CH_2\text{-}CHSH\text{-}CH_2OH,$$

soit le trimercapto-propanol ou trithioglycérine (TTG) de formule :

$$HS\text{-}CH_2\text{-}CHSH\text{-}CH_2SH,$$

deux exemples de composés qui sont en soi connus par la demande de brevet de la demanderesse déjà citée.

Comme monomère soufré de type ester on a soumis à essais différents composés de type polyester thioglycolique ou de type thioacétal comportant en outre des groupements aryliques, cycloalkyliques ou hétérocycliques et/ou des liaisons éther ou thioéther.

Les esters thioglycoliques nouveaux en soi et utilisés en exemples d'esters de polyol d'acide mercapto carboxylique sont préparés par analogie, comme il est décrit ci-après pour le bis-thioglycolate de benzène diméthylène-1,4, de formule :

$$HS\text{-}CH_2\text{-}CO\text{-}O\text{-}CH_2\text{-}C_6H_4\text{-}CH_2\text{-}O\text{-}CO\text{-}CH_2\text{-}SH$$

Dans un ballon tricol de 2 litres, muni d'une agitation centrale, d'une gaine thermométrique, d'un appareil de distillation du type commercialement connu sous le nom de Dean Stark surmonté d'un réfrigérant sous couverture d'azote, on charge :

- 138,2 g (1,0 mol) de benzène diméthanol-1,4,
- 239,5 g (2,6 mol) d'acide thioglycolique distillé,
- 3,5 g d'acide paratoluène sulfonique,
- 1000 $cm^3$ de toluène.

On chauffe à reflux (110-112°C) sous agitation pendant 1 h 45 mn ; on recueille 37 $cm^3$ d'eau dans la partie

inférieure de l'appareil de distillation. On laisse refroidir le mélange réactionnel jusqu'à température ambiante, puis on le lave à l'aide de 5 fois 500 $cm^3$, puis de 2 fois 1000 $cm^3$ d'eau.

Les monomères ester de type thioacétal utilisés en exemples de mercaptals d'esters de thioalcanol sont préparés par analogie comme il est décrit ci-après pour le bis (bis(mercapto-2 éthoxycarbonyl-méthylthio) méthylène-1,4 benzène, de formule :

$$(HS\text{-}(CH_2)_2\text{-}O\text{-}CO\text{-}CH_2\text{-}S\text{-})_2HC\text{-}C_6H_4\text{-}CH(\text{-}S\text{-}CH_2\text{-}CO\text{-}O\text{-}(CH_2)_2\text{-}SH)_2.$$

Dans un ballon tricol de 4 litres, muni d'une agitation centrale, d'une gaine thermométrique, d'un appareil de distillation connu sous le nom de Dean Stark, surmonté d'un réfrigérant sous couverture d'azote, on charge :

- 136,9 g (1,0 mole) de téréphtalaldéhyde,
- 1000 $cm^3$ de toluène.

On chauffe à 70-80 °C sous agitation jusqu'à obtention d'un milieu réactionnel homogène. On coule alors en 2 h, 372,2 g (4 moles) d'acide thioglycolique. En fin d'addition, le milieu réactionnel est devenu blanc, opaque et très visqueux. On ajoute alors 1000 $cm^3$ de toluène et on porte à reflux pendant 5 h 30 mn. On recueille 35 $cm^3$ d'eau dans la partie inférieure de l'appareil de distillation Dean Stark. On laisse refroidir le mélange réactionnel jusqu'à température ambiante. Le précipité formé est essoré, puis lavé à l'aide de 2000 $cm^3$ de cyclohexane, puis est recristallisé dans 6000 $cm^3$ d'eau (les produits non dissous sont éliminés par filtration de la solution à chaud).

Le produit est récupéré par essorage à froid et séché en étuve sous vide à 90 °C. On obtient 392,3 g (rendement de 84 % par rapport au téréphtalaldéhyde de départ) d'une poudre blanche dont le point de fusion est de 199-220 °C. Il s'agit du bis[bis(hydroxycarbonylméthylthio) méthylène]-1,4 benzène.

Ensuite, dans un ballon tricol de 2 litres, muni d'une agitation centrale, d'une gaine thermométrique, d'un appareil de distillation surmonté d'un réfrigérant sous couverture d'azote, on charge :

- 112 g (0,24 mole) de bis(bis (hydroxycarbonylméthylthio)méthylène)-1,4 benzène
- 187,5 g (2,4 mole) de thioéthanol
- 1,1 g d'acide paratoluène sulfonique
- 700 $cm^3$ de toluène.

On chauffe à reflux (109-113°C) sous agitation pendant 7h30; le milieu réactionnel est devenu homogène après 1h30 de chauffage. On laisse refroidir le mélange réactionnel jusqu'à température ambiante. On reprend le mélange réactionnel par 400 $cm^3$ d'eau.

La phase toluénique est lavée à l'aide de 2 fois 250 $cm^3$ d'eau carbonatée, puis 8 fois 300 $cm^3$ d'eau. On la sèche sur sulfate de sodium. On filtre et on évapore le toluène sous très faible pression. On obtient 121,5 g (rendement de 71% par rapport à l'acide de départ) d'un liquide jaune clair, visqueux, ayant un indice de réfraction de 1,595.

On traite ce produit par 350 $cm^3$ de dichlorométhane et 5 g de charbon actif (ébullition pendant 30 mn), on filtre et on évapore le solvant sous vide. On récupère ainsi 118,6g (rendement 70% par rapport à l'acide de départ) d'un liquide incolore, visqueux, ayant un indice de réfraction de 1,595.

A partir des différents monomères thiols et de polyisocyanate, on procède alors à la fabrication d'une lentille ophtalmique d'une manière analogue à ce qui suit.

Dans un flacon, on mélange 9,4 g (0,05 mole) de xylylène diisocyanate (XDI), 6,86 g (0,024 mole) de bis-thioglycolate de benzène diméthylène 1,4 préparé ci-dessus et 2,38 g (0,0172 mole) de TTG. On rajoute 0,02 % en masse de dibutyl-laurate d'étain comme catalyseur de polymérisation. Après avoir été dégazé, ce mélange est placé entre deux moules en verre préalablement traités pour éviter l'adhésion du polymère sur le verre. La polymérisation est effectuée selon un cycle de température comprenant 6 h pour passer de la température ambiante à 60 °C, puis 6 h de maintien à 80 °C, suivie de 3 h de maintien à 130 °C.

La lentille ophtalmique est obtenue, transparente et incolore, par démoulage du mélange ainsi polymérisé.

**EXEMPLE 1 :**

La composition utilisée comprend :

| | |
|---|---|
| Xylène diisocyanate (XDI): | 9,4 g (0,05 mole) |
| Tri-thioglycérine : | 2,38 g (0,0172 mole) |
| Bis-thioglycolate de benzène diméthylène-1,4 : | 6,86 g (0,024 mole) |

$$( HS\text{-}CH_2\text{-}CO\text{-}O\text{-}CH_2\text{-}paraC_6H_4\text{-}CH_2\text{-}O\text{-}CO\text{-}CH_2\text{-}SH )$$

La proportion molaire de trithioglycérine dans le total molaire des mono-mères est de 42 %.

Le produit obtenu présente les propriétés suivantes :

- indice de réfraction : 1,65
- constringence (nombre d'Abbe): 30
- température de transition vitreuse: 95 °C

**EXEMPLE 2 :**

La composition utilisée comprend :

| | |
|---|---|
| Xylylène diisocyanate (XDI) : | 9,4 g (0,05 mole) |
| Tri-thioglycérine : | 2,52 g (0,0176 mole) |
| Para-bis-thioglycolate de thio-4,4'diphénylène oxyéthyle-1,1' : | 10,03 g (0,024 mole) |

$$(HS\text{-}CH_2\text{-}CO\text{-}O\text{-}CH_2\text{-}CH_2\text{-}O\text{-}C_6H_4\text{-}S\text{-}C_6H_4\text{-}O\text{-}CH_2\text{-}CH_2\text{-}O\text{-}CO\text{-}CH_2\text{-}SH)$$

La proportion molaire de trithioglycérine dans le total molaire des monomères est de 42 %.

Le produit obtenu présente les propriétés suivantes :

- indice de réfraction : 1,66
- constringence (nombre d'Abbe): 29
- température de transition vitreuse: 100 °C

**EXEMPLE 3 :**

La composition utilisée comprend :

| | |
|---|---|
| Xylylène diisocyanate (XDI) : | 9,4 g (0,05 mole) |
| Tri-thioglycèrine : | 0,84 g (0,006 mole) |
| Tris-thioglycolate d'éthane tris(phénylène-4 oxyéthyle-1)-1,1,1 : | 14,5 g (0,022 mole) |

$$(CH_3\text{-}C\ (\text{-}para C_6H_4\text{-}O\text{-}CH_2\text{-}CH_2\text{-}O\text{-}CO\text{-}CH_2\text{-}SH)_3)$$

La proportion molaire de trithioglycérine dans le total molaire des monomères est de 21 %.

Le produit obtenu présente les propriétés suivantes :

- indice de réfraction : 1,66
- constringence (nombre d'Abbe): 30
- température de transition vitreuse: 105 °C

**EXEMPLE 4 :**

La composition utilisée comprend :

| | |
|---|---|
| Xylylène diisocyanate (XDI) : | 9,4 g (0,05 mole) |
| Trithioglycérine : | 2,4 g (0,0172 mole) |
| Pentakis thioglycolate de (trétraméthylène -2,2,6,6 cyclohexyle : | 5,9 g (0,01 mole) |

$$(HS\text{-}CH_2\text{-}CO\text{-}O\text{-}C_6H_7(\text{-}CH_2\text{-}O\text{-}CO\text{-}CH_2\text{-}SH)_4)$$

La proportion molaire de trithioglycérine dans le total molaire des monomères polythios est de 63 %.

Le produit obtenu présente les propriétés suivantes :

- indice de réfraction : 1,65
- constringence (nombre d'Abbe): 32
- température de transition vitreuse: 120 °C

**EXEMPLE 5 :**

La composition utilisée comprend :

| | |
|---|---|
| Xylylène diisocyanate (XDI) : | 9,4 g (0,05 mole) |
| Trithioglycérine : | 3,78 g (0,0266 mole) |
| Bis ⎜bis(mercapto-2 éthoxycarbonyl-méthylthio) méthylène⎜ 1,4 benzène : | 3,29 g (0,005 mole) |

$(HS-(CH_2)_2-O-CO-CH_2-S-)_2\ HC-pC_6H_4-CH\ (-S-CH_2-COO-(CH_2)_2-SH)_2$ )

La proportion molaire de trithioglycérine dans le total molaire des monomères est de 84 %.

Le produit obtenu présente les propriétés suivantes :

- indice de réfraction : 1,65
- constringence (nombre d'Abbe): 31
- température de transition vitreuse: 101 °C

**EXEMPLE 6 :**

La composition utilisée comprend :

| | |
|---|---|
| Xylylène diisocyanate (XDI) : | 9,4 g (0,05 mole) |
| Trithioglycérine : | 3,7 g (0,0266 mole) |
| Tétrakis(mercapto-2 éthoxycarbonyl-méthylthio) 1,1,2,2 éthane : | 2,9 g (0,005 mole) |

( $(HS-CH_2-CH_2-O-CO-CH_2S-)_2\ HC-CH\ (-SCH_2-CO-O-CH_2-CH_2-SH)_2$ )

La proportion molaire de trithioglycérine dans le total molaire des monomères est de 84 %.

Le produit obtenu présente les propriétés suivantes :

- indice de réfraction : 1,66
- constringence (nombre d'Abbe): 32
- température de transition vitreuse: 105 °C

**EXEMPLE 7 :**

La composition utilisée comprend :

| | |
|---|---|
| Xylylène diisocyanate (XDI) : | 9,4 g (0,05 mole) |
| Trithioglycérine : | 3,7 g (0,0266 mole) |
| (2-thiényl)-4 dithia-3,5 pimélate de bis (mercapto-2 éthyle) : | 1,87 g (0,005 mole) |

( thyényl-$CH(-S-CH_2-CO-O-CH_2-CH_2-SH)_2$ )

La proportion molaire de trithioglycérine dans le total molaire des monomères est de 84 %.

Le produit obtenu présente les propriétés suivantes :

- indice de réfraction : 1,65
- constringence (nombre d'Abbe): 30
- température de transition vitreuse: 95 °C

**EXEMPLE 8 :**

La composition utilisée comprend :

| | |
|---|---|
| Xylylène diisocyanate (XDI) : | 9,4 g (0,05 mole) |
| Trithioglycérine : | 1,86 g (0,0133 mole) |
| Phényl-4 dithia-3,5 pimélate de bis (mercapto-2 éthyle) : | 0,9 g (0,0025 mole) |

( $C_6H_5-CH\ (-S-CH_2-CO-O-CH_2-CH_2-SH)_2$ )

La proportion molaire de trithioglycérine dans le total molaire des monomères est de 84 %.

Le produit obtenu présente les propriétés suivantes :

- indice de réfraction : 1,65
- constringence (nombre d'Abbe): 30
- température de transition vitreuse: 98 °C

**EXEMPLE 9 :**

La composition utilisée comprend :

| | |
|---|---|
| Xylylène diisocyanate (XDI) : | 9,4 g (0,05 mole) |
| Dimercapto-1,2 propanol : | 2,23 g (0,017 mole) |
| Bis-thioglycolate de benzène diméthylène-1,4 : | 6,86 g (0,024 mole) |

( $HS-CH_2-CO-O-CH_2-paraC_6H_4-CH_2-O-CO-CH_2-SH$ )

La proportion molaire de dimercapto propanol dans le total molaire des monomères est de 41 %.
Le produit obtenu présente les propriétés suivantes :

- indice de réfraction : 1,63
- constringence (nombre d'Abbe): 33
- température de transition vitreuse: 100 °C

**EXEMPLE 10 :**

La composition utilisée comprend :

| | |
|---|---|
| Xylylène diisocyanate (XDI) : | 9,4 g (0,05 mole) |
| Dimercapto-propanol (DMP) : | 2,23 g (0,018 mole) |
| Para-bis-thioglycolate de thio-4,4'diphénylène oxyéthyle-1,1' : | 10,03 g (0,024 mole) |

( $HS-CH_2-CO-O-CH_2-CH_2-C_6H_4-S-C_6H_4-CH_2-CH_2-O-CO-CH_2-SH$ )

La proportion molaire de dimercapto propanol dans le total molaire des monomères est de 43 %.
Le produit obtenu présente les propriétés suivantes :

- indice de réfraction : 1,63
- constringence (nombre d'Abbe): 32
- température de transition vitreuse: 100 °C

**EXEMPLE 11 :**

La composition utilisée comprend :

| | |
|---|---|
| Xylylène diisocyanate (XDI) : | 9,4 g (0,05 mole) |
| Dimercaptopropanol (DMP): | 1,12 g (0,009 mole) |
| Tris-thioglycolate d'éthane tris(phénylène-4 oxyéthyle-1)-1,1,1 : | 15,84 g (0,024 mole) |

( $CH_3-C(-paraC_6H_4-O-CH_2-CH_2-O-CO-CH_2-SH)_3$ )

La proportion molaire de dimercapto propanol dans le total molaire des monomères est de 27 %.
Le produit obtenu présente les propriétés suivantes :

- indice de réfraction : 1,64
- constringence (nombre d'Abbe): 30
- température de transition vitreuse: 115 °C

**EXEMPLE 12 :**

La composition utilisée comprend :

| | |
|---|---|
| Xylylène diisocyanate (XDI) : | 9,4 g (0,05 mole) |
| Dimercapto-propanol (DMP) : | 0,99 g (0,008 mole) |
| Pentakis thioglycolate de (tétraméthylène-2,2,6,6 cyclohexyle : | 8,85 g (0,015 mole) |

( $HS-CH_2-CO-O-C_6H_7$ $(-CH_2-O-CO-CH_2-SH)_4$ )

La proportion molaire de dimercapto propanol dans le total molaire des monomères polythios est de 35 %.

Le produit obtenu présente les propriétés suivantes :

- indice de réfraction : 1,63
- constringence (nombre d'Abbe): 34
- température de transition vitreuse: 135 °C

**EXEMPLE 13 :**

La composition utilisée comprend :

| | |
|---|---|
| Xylylène diisocyanate (XDI) : | 9,4 g (0,05 mole) |
| Dimercapto-propanol (DMP) : | 0,98 g (0,007 mole) |
| Bis ⎪bis(mercapto-2 éthoxycarbonyl-méthylthio) méthylène⎪ 1,4 benzène : | 13,16 g (0,020 mole) |

( $(HS-CH_2-CH_2-OCO-CH_2-S-)_2$ $HC-pC_6H_4-CH$ $(-S-CH_2-COO-CH_2-CH_2-SH)_2$ )

La proportion molaire de dimercapto propanol dans le total molaire des monomères est de 26 %.

Le produit obtenu présente les propriétés suivantes :

- indice de réfraction : 1,62
- constringence (nombre d'Abbe): 35
- température de transition vitreuse: 100 °C

**EXEMPLE 14:**

La composition utilisée comprend :

| | |
|---|---|
| Xylylène diisocyanate (XDI) : | 9,4 g (0,05 mole) |
| Dimercapto-propanol (DMP) : | 0,98 g (0,007 mole) |
| Tétrakis(mercapto-2 éthoxycarbonyl-méthylthio)-1,1,2,2 éthane : | 11,64 g (0,020 mole) |

( $(HS-CH_2-CH_2-O-CO-CH_2S-)_2$ $HC-CH$ $(-S-CH_2-CO-O-CH_2-CH_2-SH)_2$ )

La proportion molaire de dimercapto propanol dans le total molaire des monomères est de 26 %.

Le produit obtenu présente les propriétés suivantes :

- indice de réfraction : 1,63
- constringence (nombre d'Abbe): 34
- température de transition vitreuse: 105 °C

## Revendications

1. Lentilles ophtalmiques caractérisées en ce qu'elles résultent du durcissement d'une composition de polyuréthane comprenant :
   - un premier constituant formé par un polyisocyanate au moins difonctionnel ;
   - un deuxième constituant formé par un monomère saturé acyclique non ester porteur d'au moins trois fonctions réactives à l'égard des isocyanates pour former des liaisons carbamates, parmi lesquelles

fonctions réactives au moins 40% en nombre sont des groupes mercaptan -SH, la proportion desdites fonctions étant d'au moins 45% en masse par rapport à la masse moléculaire dudit monomère;

- et un troisième constituant formé par un monomère soufré portant au moins un groupement de type (HS-Z-COO-), où Z représente un radical hydrocarboné, choisi parmi les monomères polythiois de type ester de polyol d'acide mercapto-carboxylique et les monomères polythiois de type mercaptal d'ester de thioalcanol, dans une proportion de l'ordre de 10 à 90 % en moles par rapport à la quantité molaire du total du second et du troisième constituants.

**2.** Lentilles ophtalmiques selon la revendication 1 , caractérisées en ce que le polyisocyanate ne comporte pas d'atome de soufre dans sa molécule.

**3.** Lentilles opthalmiques selon les revendications 1 ou 2, caractérisées en ce que ledit premier constituant est de type isocyanate d'arylalkyle difonctionnel.

**4.** Lentilles ophtalmiques selon l'une quelconque des revendications 1 à 3, caractérisées en ce que ledit deuxième constituant est un monomère au moins trifonctionnel constitué par un composé aliphatique acyclique qui comporte au moins 3 atomes de carbone et au plus 10 atomes de carbone, dont au moins les 3/4 et, de préférence, la totalité sont pourvus de fonctions réactives -SH ou -OH.

**5.** Lentilles ophtalmiques selon l'une quelconque des revendications 1 à 4, caractérisées en ce que lesdites fonctions réactives du second constituant sont au moins 2 groupes mercaptan -SH et au plus un groupe -OH.

**6.** Lentilles ophtalmiques selon la revendication 5, caractérisées en ce que ledit second constituant est un monomère polythiol choisi parmi les composés suivants: dimercapto-1,2 propanol, dithioérythritol, trithioglycérine, tétramercaptobutane, pentaérythrithiol.

**7.** Lentilles ophtalmiques selon l'une quelconque des revendications 1 à 6, caractérisées en ce que ledit troisième constituant est un monomère de type mercaptal d'ester de thioalcanol de formule générale :

$$\left[ HS - Z - COO \right]_n A$$

dans laquelle :

- Z représente un radical alkylène inférieur
- A représente un reste hydrocarboné de valence n
- n représente 2,3 ou 5.

**8.** Lentilles ophtalmiques selon la revendication 7, caractérisées en ce que A est choisi parmi les radicaux de formules :

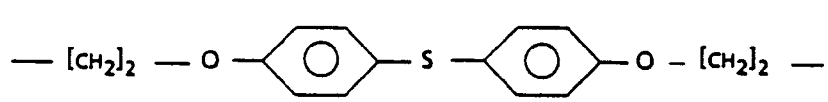

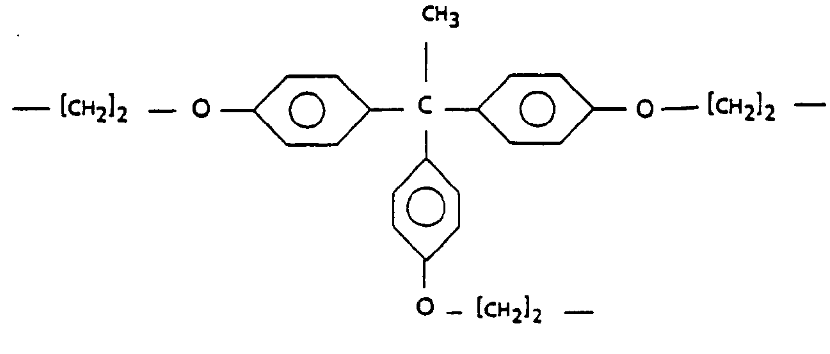

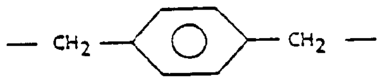

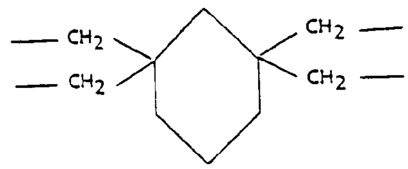

**9.** Lentilles ophtalmiques selon l'une quelconque des revendications 1 à 6, caractérisées en ce que ledit troisième constituant est un monomère de type ester de polyol d'acide mercapto-carboxylique de formule générale :

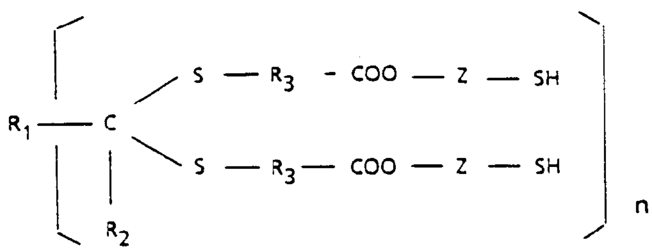

dans laquelle :
- Z correspond à

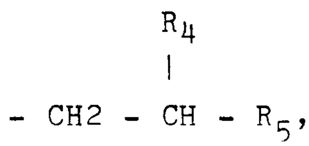

- n représente 1 ou 2,
- $R_1$ représente un radical hydrocarboné acyclique ou cyclique de valence n pouvant comporter dans sa chaine hydrocarbonée un hétéroatome, ou un lien valentiel simple,
- $R_2$ représente un atome d'hydrogène, ou un radical alkyle inférieur ou un aryle,
- $R_3$ représente un radical alkylène inférieur,
- $R_4$ représente un atome d'hydrogène ou un radical SH,
- $R_5$ représente un lien valentiel simple ou un radical méthylène.

**10.** Lentilles ophtalmiques selon la revendication 9, caractérisées en ce que lorsque n=1, que $R_1$ représente un radical phényle ou un radical thiényl-2 et alors:
- $R_2$ représente un atome d'hydrogène,
- $R_3$ représente un radical méthylène,
- $R_4$ représente un atome d'hydrogène,
- $R_5$ représente un lien valentiel simple.

**11.** Lentilles ophtalmiques selon la revendication 9, caractérisées en ce que lorsque n=2, $R_1$ représente un paraphénylène ou un lien valentiel simple et alors:
- $R_2$ représente un atome d'hydrogène,
- $R_3$ représente un radical méthylène,
- $R_4$ représente un atome d'hydrogène,
- $R_5$ représente un lien valentiel simple.

**12.** Lentilles ophtalmiques selon la revendication 7 ou 8, caractérisées en ce que ledit troisième constituant est choisi parmi les esters thioglycoliques du type des pluri-thioglycolates de benzène ou cyclohexane pluri-alkylène et/ou de (thio)phénylène alkyle ou oxyalkyle, tels les composés suivants : bis-thioglycolate de benzène diméthylène-1,4, bis-thioglycolate de thio-4,4'diphénylène oxyéthyle, tris-thioglycolate d'éthane tris(phénylèneoxyéthyle)-1,1', pentakis thioglycolate de tétraméthylène cyclohexyle.

13. Lentilles ophtalmiques selon l'une quelconque des revendication 9 à 11, caractérisées en ce que ledit troisième constituant est choisi parmi les mercaptals bis-mercapto-alkoxy-carbonylés dérivés de mono ou poly acides aryliques, alkyliques ou hétérocycliques, tels les composés suivants : bis (bis(mercapto-2 éthoxycarbonyl-méthylthio) méthylène)-1,4 benzène, tétrakis(mercapto-2 éthoxycarbonylméthylthio)-1,1,2,2 éthane, 2-thiényl-4 dithia-3,5 pimélate de bis (mercapto-2 éthyle), phényl-4 dithia-3,5 pimélate de bis (mercapto-2 éthyle).

Office européen des brevets

# RAPPORT DE RECHERCHE EUROPEENNE

Numero de la demande
EP 92 40 3286

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X<br><br><br><br><br><br>Y | EP-A-0 235 743 (MITSUI TOATSU CHEMICALS INC.)<br>* revendications 1-6 *<br>* page 5, ligne 15 - page 8, ligne 20 *<br>* page 9, ligne 7 - ligne 21 *<br>* page 10, ligne 24 - page 11, ligne 6 *<br>--- | 1-13<br><br><br><br><br><br>1-13 | C08G18/38<br>G02B1/04 |
| X | EP-A-0 329 387 (MITSUI TOATSU CHEMICALS INC.)<br>* revendications 1-11 *<br>* page 3, ligne 23 - page 4, ligne 58 *<br>* page 8; exemple 14; tableau 1 *<br>--- | 1-13 | |
| X | EP-A-0 330 363 (MITSUI TOATSU CHEMICALS INC.)<br>* revendication 1 *<br>* colonne 5, ligne 46 - colonne 9, ligne 13 *<br>* page 9; exemple 9; tableau 1 *<br>--- | 1-13 | |
| D,Y | EP-A-0 408 459 (ESSILOR INTERNATIONAL)<br>* revendications 1,2,4-9 *<br>* colonne 3, ligne 5 - colonne 4, ligne 49 *<br>* colonne 5, ligne 10 - ligne 15 *<br>--- | 1-13 | **DOMAINES TECHNIQUES RECHERCHES (Int. Cl.5 )**<br>C08G<br>G02B |
| P,X | EP-A-0 490 777 (RHONE-POULENC CHEMIE)<br>* revendications 1-14 *<br>* page 3, ligne 11 - ligne 29 *<br>* page 4, ligne 40 - ligne 56 *<br>* page 6, ligne 15 - ligne 34 *<br>----- | 1-13 | |

Le présent rapport a été établi pour toutes les revendications

| Lieu de la recherche | Date d'achèvement de la recherche | Examinateur |
|---|---|---|
| LA HAYE | 15 AVRIL 1993 | DEPIJPER R.D.C. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)